# EUROPEAN PATENT SPECIFICATION

(11) **EP 3 002 096 B1**
(45) Date of publication and mention of the grant of the patent: **01.02.2017**
(21) Application number: 15002729.0
(22) Date of filing: 16.09.2015
(51) Int. Cl.: B27B 5/065, B23D 59/00, B27B 5/18, B23D 45/06

(54) **CUTTING MACHINE**
SCHNEIDMASCHINE
MACHINE A DECOUPER

(30) Priority: 07.10.2014 IT BO20140549
(43) Date of publication of application: 06.04.2016
(73) Proprietor: Naldi, Valter, 40137 Bologna (IT)
(72) Inventor: Naldi, Valter, 40137 Bologna (IT)

(56) References cited:
- EP-A1- 1 598 160
- EP-A1- 2 620 246
- EP-B1- 1 716 955
- DE-U1- 20 009 611

## Description

The present invention relates to a cutting machine according to the preamble of independent claim 1. Such a machine is known from document EP 2 620 246 A.

Cutting machines according to the present invention, for example panel cutting machines, comprise a saw carriage, which is mobile along a base, which is designed to guide and support the panels to be cut. In the upper part of the machine a solid pressing unit is provided, which, during cutting operations, firmly locks the panels so as to prevent them from being moved during the sizing operation. This strong locking action is essential for the achievement of a good cutting quality and of a good precision in the sizes of the panels cut. The correct and precise sizing of the panels in submultiples requires a trimming operation to be carried out along the entire perimeter of the panels themselves, since the four sides arranged on the outside are usually rough and with a level of finishing that is not acceptable.

The blade assembly, besides carrying out a horizontal sliding movement caused by said saw carriage, is also moved in a vertical direction, so as to allow the two blades, usually a cutting blade or circular blade and an incision blade, to project from the working table only during the cutting operation, when the panels are locked by the upper pressing system.

When the saw carriage returns to the initial position, in order to repeat the cutting cycle, the blade unit is lowered under the working table so as to allow a simultaneous repositioning of the panels, which, in automatic machines, takes place by means of (automated and known) pushing elements, which are provided with grippers holding the panels themselves.

These grippers are provided, in particular, with bottom fingers, which are designed to slide on the inside of suitable grooves obtained on the working table. These bottom fingers, given their length for an optimal grip on the panels, must necessarily be enabled to extend beyond the cutting slot during the positioning of the panels for the last trimming or rear trimming cut, so as not to limit the size of the trimming itself, which, must basically be as small as possible for a better use of the panels.

Cutting machines can have usable cutting lengths up to 6 - 7 meters, since they are designed to cut panels made of wood, aluminium, plastic, etc., which have such lengths. On the same machine the panels can be cut in single strips, which then will have to be cut crosswise.

Therefore, as skilled people know, during longitudinal and transverse cutting operations, usually during trimming operations carried out on the four sides arranged on the outside, swarf can be produced, which, if small-sized, can fall through the cutting slot, which usually is some millimetres large, thus reaching the inside of the cutting machine, which can cause serious faults due to damages caused to the different inner organs of the machine itself.

Patent EP 1716955 B1, in order to solve this problem, discloses a closing system to close the cutting slot, which is longitudinal to the cutting direction and uses a strip that is windable and slides on the inside of a guide obtained on the inner walls of the cutting slot. This necessarily causes the upper surface of the closing strip to be arranged at a lower level compared to the working table, where the panels are supported and slide, thus creating a channel whose depth is determined by the thickness of the table portions arranged above the guide segments provided for the closing strip.

These table portions must necessarily be very thick in order to prevent the table from crushing or bending during the panel locking operation carried out by the upper pressing unit, which would jeopardize the cutting quality and prevent the closing strip from properly sliding. Furthermore, in order not to interfere with the bottom fingers of the grippers of automatic machines, this strip must necessarily be arranged at a lower level compared to the thickness of the bottom fingers of the grippers themselves. In this way a channel is formed, which can collect small-sized swarf or small-sized trimming residues, which, only in manual machines, can be manually removed by the operator before moving the panels.

Obviously, this step of manually removing the swarf from the cutting channel cannot be performed in automatic machines and, therefore, this system cannot be used in these machines, since the small-sized swarf collected on the inside of the channel can cause problems or faults both during the sliding movement of the closing strip and during the movement of the panels, which would tend to slide above the trimming residues piled up on the inside of the channel. By the way, the fact that the problem discussed above actually exists is also confirmed by the proprietor of the patent, who explicitly mentions possible systems to remove small-sized trimming residues from the strip by means of air jets and/or brushes, which, in any case, are both not suited to fulfil the task.

Utility model DE 20009611 U1 describes a system to close a cutting slot, said system consisting of a rigid or semi-rigid plate, whose cross-section has the shape of an upside-down T, so as to have a base, which can freely slide on the inside of relative horizontal guides obtained on the inner walls of the cutting slot, and a central vertical portion, which completely closes the cutting slot up to the level of the working table. In this way the central portion of the closing plate, by being arranged at the same level as the plane, causes small-sized swarf or trimming residues to slide on the plane without getting trapped.

This solution is exclusively suited for extremely short cutting machines, as the rigid or semi-rigid closing plate could hardly be handled in cutting machines with usable cutting lengths up to 6 - 7 meters; as a matter of fact, when the saw carriage is in the rest or initial position, the rigid or semi-rigid plate would necessarily project outwards from the cutting machine, with all the undoubted drawbacks and dangers resulting therefrom.

Therefore, the object of the present invention is to provide a cutting machine provided with a cutting slot closing device having features that allow it to be arranged at the same level as the panel supporting and sliding plane, so as to allow trimming residues to be easily removed, so as to be able to move within the normal sizes of cutting machines and so as to be able to be mounted on automatic or semi-automatic machine provided with panel grippers or similar apparatuses.

Hence, the present invention provides a cutting machine according to the independent claim or to any of the claims that directly or indirectly depend on said independent claim.

The present invention will be best understood upon perusal of the following detailed description of a preferred embodiment, which is provided by way of example and is not limiting, with reference to the accompanying drawings, in which:
- figure 1 shows, in a plan view, a cutting machine provided with the flexible cutting slot closing element, with two possible panel cutting patterns pointed out;
- figure 2 shows a front view of the cutting machine of figure 1, which highlights the saw carriage in some positions of its during the working cycle and the cutting slot closing element;
- figure 3 shows a transverse view of the saw carriage and of the flexible cutting slot closing element;
- figure 4 shows a cross section of the working table, which highlights the passage of the bottom fingers of the grippers in correspondence to the recesses of the flexible closing element for the cutting slot when the saw carriage is in the end-of-cut position position beyond the square;
- figure 5 shows cross-section A-A of figure 4 concerning the area of the cutting slot with the cross-section of the closing element;
- figure 6 shows cross-section B-B of figure 4 concerning the area of the cutting slot with the cross-section of the closing element in correspondence to a recess provided for the passage of the bottom fingers of the grippers;
- figure 7 shows a cross section of the working table with a safety system provided on both sides of the cutting slot arranged in a first rest position;
- figure 8 shows a cross section of the working table with the safety system provided on both sides of the cutting slot arranged in a second operating position, which permits the feeding of the bottom fingers of the grippers;
- figure 9 shows a plan view of a detail of the transverse area of the cutting line with the safety systems provided on both sides of the cutting slot arranged in a first rest position and wherein the flexible closing element for the cutting slot has the recesses aligned with the grooves provided on the working table for the passage of the bottom fingers of the grippers.

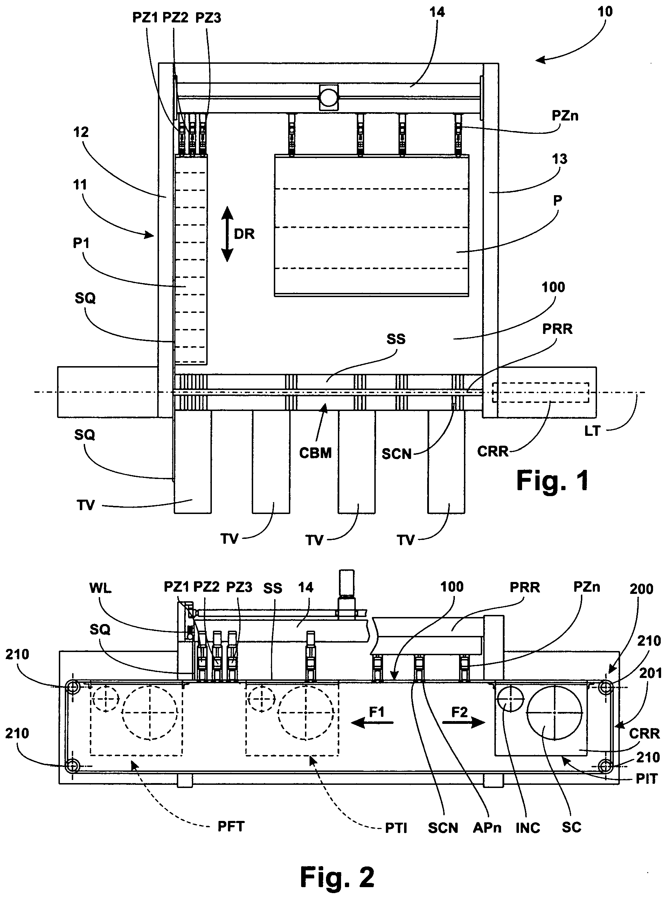

In figures 1 and 2, number 10 indicates, as a whole, a cutting machine according to the present invention.

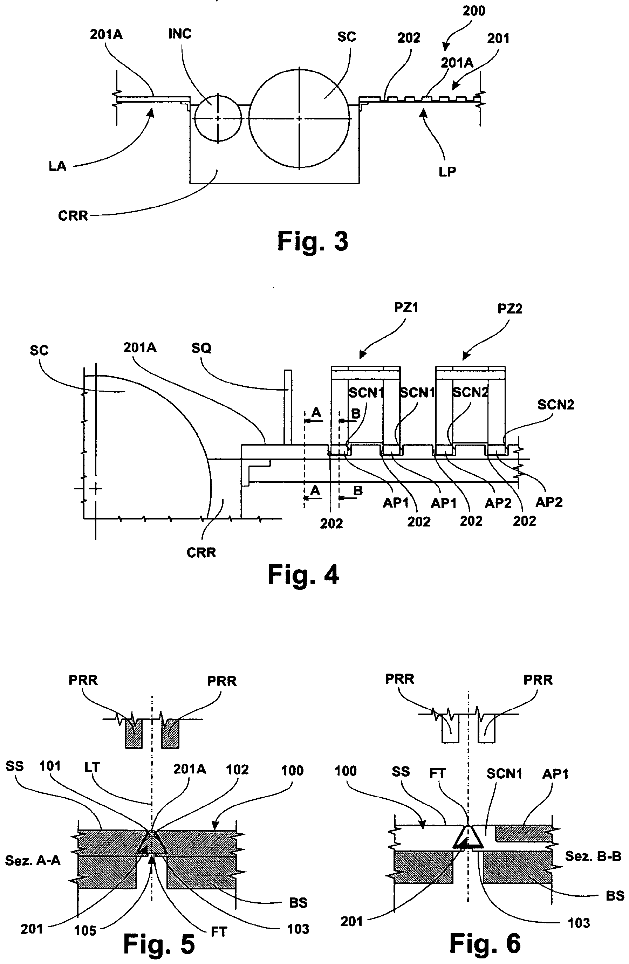

The cutting machine 10 comprises a support structure 11, a working table 100, and a saw carriage (CRR), the latter being provided, as usual, with an incisor (INC), not essential, and with a circular blade (SC) (figures 2, 3). Said blades (INC, SC) project from an upper surface (SS) of the working table 100 only during the cutting operation, which takes place, according to a direction represented by arrow F1 (figure2), when the panels, the panel stack or, anyway, the material to be cut (P, P1) is pressed by a pressing unit (PRR) (figures 1, 2, 5, 6), generally acting on both sides of a cutting line (LT), against the upper surface (SS) of the working table 100.

Said pressing unit (PRR) basically performs its active pressing action, aimed at locking the material to be cut, along the entire length of the working table 100.

When the saw carriage (CRR) returns to the initial position, according to a direction represented by arrow F2 (figure 2), in order to repeat the cutting cycle, said blades (INC, SC) are lowered below the upper surface (SS) by means of known means, which are not shown.

The support structure 11 comprises tow lateral supports 12, 13, on which the wheels (WL) (only one of them is shown in figure 2) of a transverse pusher carriage 14 rest, said transverse pusher carriage 14 being designed to position the panels (P, P1) to be cut and being provided with a plurality of grippers (PZ1), (PZ2), (PZ3),...(PZn) distributed along the pusher carriage 14 itself.

Furthermore, each gripper (PZ1), (PZ2), (PZ3),... (PZn) is respectively equipped with two bottom fingers (AP1), (AP2), (APn) (figures 2, 4, 6).

The transverse pusher carriage 14, which rests on the wheels (WL), is provided with known driving means, which allow the entire transverse pusher carriage 14 to be moved according to the two directions indicated by a doubleheaded arrow (DR). This causes the panels (P, P1) to slide on the upper surface (SS) of the working table 100 from and to a transverse cutting line (LT) (figures 1, 5, 6), which is associated with a cutting slot (FT) (figures 5, 6, 7), which, during the active cutting step, is run through by the incisor (INC) and by the circular blade (SC).

The cutting machine 10 is also provided with projecting tables (TV) and with a lateral square (SQ) (figure 1).

The working table 100, as already mentioned above, is provided with a series of grooves (SCN), which permit the passage of respective grippers (PZ1), (PZ2), (PZ3),...(PZn) (see figures 1, 2, 4, 6, 9).

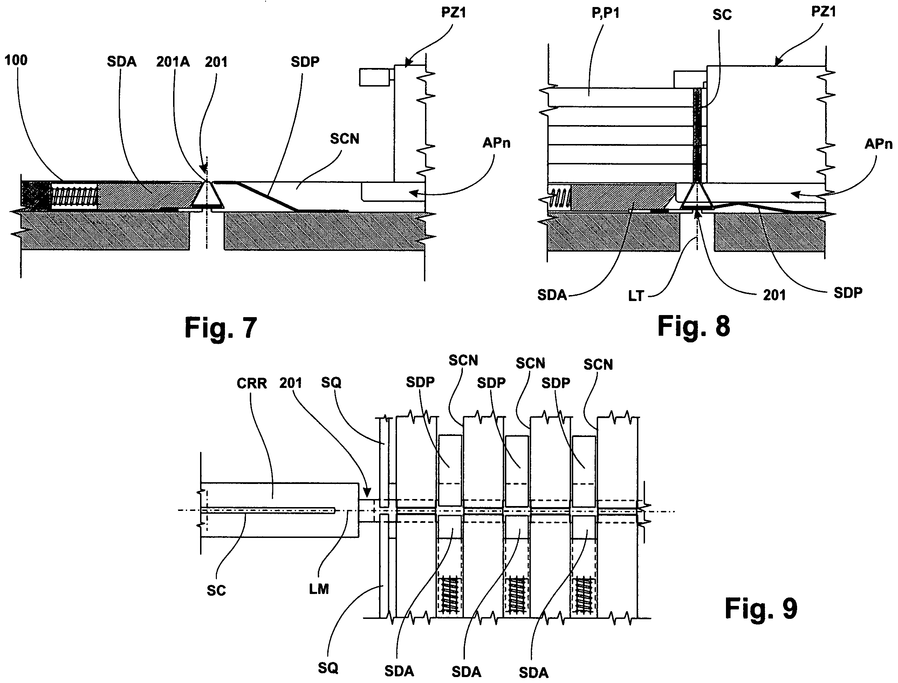

In a known manner and with reference to figures 1, 2, 5, 6, the working table 100 comprises, as already mentioned above, the upper surface (SS) to support the panels (P, P1). Said upper surface (SS) is transversely engaged by the cutting slot (FT), which is some millimetres large and features, defined at the centre thereof, the theoretical cutting line (LT), which corresponds to the middle line (LM) of the circular blade (SC) (see figure 9).

Generally speaking, current cutting machines have a working table 100 consisting of an iron base (BS) (figures 5, 6), which is an integral part of the guide base of the saw carriage. On this iron base there is generally fixed the actual working table 100, on which the panels (P, P1) slide and which is generally made of an anti-scratch material, given the delicate nature of the panels (P, P1) to be cut.

The panels (P), which are manually loaded by operators on the side of the front tables (TV) or are loaded in an automatic manner with known means in automated machines, are firmly locked by the grippers (PZ1), (PZ2), (PZ3),...(PZn) of the pusher device 14. The panels, after having been locked in this way, are fed to the cutting line (LT) to produce the first or front trimmed edge, which is pushed during the following panel feeding steps, until it reaches an area that is arranged on the outside of a body or base (CBM) (figure 1) of the cutting machine, where it can be manually or automatically removed. The cutting cycle goes on with further feeding and cutting procedures, until the panels (P, P1) are positioned for the last trimming or rear trimming cut. This trimmed edge, in automatic machines, is subsequently removed from the working table due to the thrust exerted by the new panels undergoing the following cutting cycle or by means of specific apparatuses. During this step, the trimmed edges must necessarily move past the cutting slot in order to reach the area arranged on the outside of the machine body (CBM), where they can be removed.

Trimming residues, when they are smaller than the width of the cutting slot (FT) and, anyway, when the thickness of the panels (P, P1) is smaller than the width of the cutting slot itself, naturally tend, given their flexible nature, to completely or - even worse - partially fall through the cutting slot. As a matter of fact, in the latter case, the panels (P, P1) pushed by the pusher device 14 during the following feeding procedure naturally tend to slide on top of the trimming residues that partially fell into the cutting slot and now partially lie on the working table, thus forcing operators to stop the cutting cycle in order to manually remove the trimming residues, reposition the panels and then restart the cycle that has been interrupted. Obviously, these steps are extremely difficult to be carried out when dealing with large panels or panel stacks that are cut in automatic or semi-automatic machines that can be hardly accessed to reach the inside.

The length of the bottom fingers (AP1), (AP2), (APn) of the grippers (PZ1), (PZ2), (PZ3),...(PZn), for an optimal grip on the panels (P), must definitely be greater than the width of the last or rear trimmed edge. Because of this, the fingers (AP1), (AP2), (APn) must necessarily extend beyond the cutting slot (FT) so as to be able to position the panels without any limitation of the width of the trimmed edges (figure 8). After the panels have been positioned for the last trimming cut, the pressing unit (PRR), which usually has suitable recesses to avoid the grippers, is lowered and, as soon as the panels are locked, the grippers are opened and moved backwards so as to allow the cutting procedure to be carried out.

Other generic apparatuses can be mounted on the machine, for example those needed to remove the last rear trimmed edge, which need to move above the cutting line and, anyway, under the upper surface (SS) of the working table 100.

In order to prevent trimming residues from totally or partially falling into the cutting slot (FT), the cutting machine 10 is provided with a closing device 200 (figures 2, 3) to close the cutting clot (FT), whose structure and functions will be better explained below.

The closing device 200 comprises, in particular, a flexible closing element 201 (figures 2 and 3), which is designed to slide immediately under the cutting slot (FT) in a phase relationship with the saw carriage (CRR) during the movement thereof.

The upper surface 201A (figures 3, 4, 5, 7) of the flexible closing element 201 is arranged nearly at the same level as the upper surface (SS) of the working table 100, so as to make it easier for trimming residues to slide while they are being removed on the cutting slot (FT).

The flexible closing element 201 is totally comprised within the body of the machine 10 and is constrained at its ends to opposite sides of the saw carriage (CRR). In order to guide the aforesaid closing element 201, the closing device 200 comprises, furthermore, restraining means 210 (figure 2), which consist of a plurality of pulleys arranged close to the corners of the lower part of the machine 10 or, anyway, in positions in which there is no need to cause a change of direction of the aforesaid flexible closing element 201.

In this context, for an optimal mechanical resistance to the bending of the working table 100 during the panel stack locking action performed by the upper pressing unit (PRR), its part facing the cutting slot (FT) is shaped with two inclined profiles 101, 102 (figures 5 and 6), which act as guide of the flexible closing element 201. The latter is supported, on the lower side, by a suitable shaping 103 (figures 5 and 6) of the working table 100. The aforesaid inclined profiles 101, 102 and shaping 103 define, underneath the working table 100, a guide and support groove 105 for the flexible closing element 201, inside which said element can freely slide.

The guide system 105 described above and, in particular, the support elements 103 ensure, along the entire cutting slot (FT), an optimal support of the flexible closing element 201, which otherwise would tend to bend towards the inside of the cutting machine 10 both due to its weight and due to the weight of the trimming residues that said flexible element 201 has to support.

The flexible closing element 201, in a first embodiment thereof, can advantageously consist of a normal and very cheap trapezoidal belt (figures 5 and 6), which is used to transmit the motion of pulleys and, therefore, is suited to be flexible and slide on the inside of two inclined recesses.

According to the present invention, the flexible closing element 201 is provided with a plurality of recesses 202 (figure 3), which are properly distributed in at least part thereof. In particular, the recesses 202 are arranged in such a way that, in correspondence to a rest position of the saw carriage (CRR) along its stroke, each recess (202) is aligned with the corresponding bottom finger (AP1), (AP2), (APn) of the gripper (PZn) or of another apparatus, so as to permit the passage of the latter above the cutting slot (FT) and through the recess 202.

In a first embodiment of the flexible closing element 201, a series of recesses 202 can be provided, which are arranged on the rear side of the flexible closing element (LP) (figure 3) at the back the saw carriage (CRR), behind the circular blade (SC), so as to exactly reproduce the arrangement of the grooves (SCN) for the grippers (PZn) available on the working table 100. In this way, the saw carriage (CRR), at the end of the cut immediately before the last trimming cut, is in a end-of-stroke or end-of-maximum-stroke position (PFT) (figure 2) (beyond the square SQ), so as to cause the recesses 202 of the flexible closing element to match the grooves (SCN) of the grippers available on the working table.

Similarly, in a different embodiment, the recesses can be obtained on the side (LA) (figure 3) of the flexible closing element 201 arranged at the front of the saw carriage 8CRR) (on the side of the incisor INC). In this case, the position of the saw carriage (CRR) permitting the passage of the bottom fingers (APn) of the grippers is the start-of-longitudinal-cut rest position (PIT).

It is also possible to make a series of recesses 202 on the flexible closing element 201 on both sides, namely on the front side (LA) and of the rear side (LP) relative to the saw carriage (CRR), so that there can be different positions of the saw carriage itself that allow the recesses 202 of the flexible closing element 201 to match the grooves (SCN) for the grippers provided on the working table 100. In this case, at least one further position could be defined, for example an intermediate cut position (PTI) (figure 2), where the recesses 202 of the flexible closing element 201 match the grooves (SCNn) of the working table 100.

The cutting machine 10 described above is also provided with safety systems, since the operators may accidentally put their fingers in the grooves (SCN) during manual removal of the cut panels. During this operation, the saw carriage (CRR) may carry out its positioning stroke for the following cutting phase. The movement of the saw carriage (CRR) also causes the movement of the flexible closing element (201) for the cutting slot (FT), which, as it is provided with the aforesaid recesses (202), may potentially be dangerous. To this aim, the present invention provides the closing of the sides of the cutting slot (FT) close to the grooves (SCN) for the bottom fingers (APn) of the grippers, so as to prevent operators from putting the fingers in dangerous areas, by means of mobile mechanical elements (SDA,SDP) (figures 7, 8, 9), which are moved by the bottom fingers (APn) of the grippers upon their passage. A first mobile element SDP, arranged upstream of the cutting slot (FT), consists of a shaped spring, which is lowered upon the passage of the bottom fingers of the grippers (figure 8). A second mobile element SDA, arranged downstream of the cutting slot (FT), consists of a spring-loaded slider, which slides inside a relative guide obtained inside the working table 100 and is mobile between a lateral closing position, in which the cutting slot (FT) is closed (figure 7), and an opening position, which permits the maximum possible stroke of the bottom fingers (APn) of the grippers (figure 8). After the grippers have been retracted, both mechanical mobile elements automatically go back to their normal lateral closing position, in which the cutting slot (FT) is closed.

With the adoption of the closing system 200 described above to close the cutting slot (FT), front and rear trimming residues are prevented from falling into the cutting slot (FT) and the removal of the rear trimming residues from the working table 100 can take place with the saw carriage (CRR) in any position along the cutting line (LT), since both the front side (LA) and the rear side (LP) of the flexible closing element 201 always close the cutting slot (FT), since they are nearly at the same level as the working table.

The main advantages of the cutting machine described above are the following:
- With the closing element arranged almost at the same level as or aligned with the table on which the panels slide and are supported, one can easily remove trimming residues without causing them to fall into the cutting machine or get trapped between the cutting slot and the panels pushed by the pusher device 14;
- The flexibility of the closing element used to close the cutting slot allows it to be completely housed on the inside of the cutting machine;
- The particular shaping of the guides on the inner walls of the cutting slot (FT) permits an effective support of the flexible closing element 201, which can slide under the cutting slot itself without having to undergo any bending both due to its own weight and due to the trimming residues to be supported; furthermore, it ensures a remarkable mechanical resistance to bending on the part of the working table 100;
- The closing element can consist of a normal trapezoidal belt, which is commonly available in stores and, therefore, is very cheap;
- The special shape of the recesses present on the flexible closing element allows the latter to be used in cutting machines provided with grippers for the panels that are suited to extend beyond the cutting slot, so as not to limit the size of the last trimmed edge.

## Claims

1. A cutting machine (10) comprising:
- a support structure (11) provided with a working table (100) having an upper surface (SS);
- a saw carriage (CRR) comprising at least one circular blade (SC), which is suited to slide, during the cutting operation, along a cutting slot (FT) obtained on said working table (100);
- at least one pressing unit (PRR) acting upon the material to be cut on at least one side of said cutting slot (FT); and the cutting machine comprising at least one closing device (200) to close the cutting slot (FT), so as to prevent swarf from falling through;
- at least one pusher device (14) for the positioning of the material to be cut, which is provided with at least one gripper (PZn), whose bottom finger (APn) is suited to slide inside a proper groove (SCN) provided on the working table (100);
the cutting machine (10) being **characterised in that** said closing device (200) comprises: a flexible closing element (201) to close the cutting slot (FT), which has a linear extension, mobile with a phase relationship relative to the movement of the saw carriage (CRR) and suited to slide under the working table (100) along a relative guide and support groove (105) provided along said cutting slot (FT); restraining means (210) to restrain said flexible closing element (201) being provided under the working table (100) outside of said guide and support groove (105) and being suited to completely keep said flexible closing element (201) within the inner body of the cutting machine (10); the upper surface (201A) of said flexible closing element (201) being arranged nearly at the same level as the upper surface (SS) of the working table (100); said flexible closing element (201) being provided with at least one recess (202), so that, at least in a rest position (PFT, PIT, PTI) of said saw carriage (CRR) along its stroke, said at least one recess (202) is aligned with the corresponding bottom finger (APn) of the gripper (PZn) or of another apparatus, so as to permit the passage of the latter above the cutting slot (FT) and through said recess (202).

2. A cutting machine according to claim 1, **characterised in that** the flexible closing element (201) comprises a plurality of recesses (202), and **in that**, with said saw carriage (CRR) in any of the said rest positions (PFT, PIT, PTI), the arrangement of the recesses (202) of the flexible closing element (201) exactly reproduces the arrangement of the grooves (SCN) for the grippers (PZn) or for the other apparatuses available in said working table (100).

3. A cutting machine according to any of the previous claims, **characterised in that** said flexible closing element (201) extends within the inner body of said cutting machine (10), so that its opposite sides (LA, LP) are constrained to opposite sides of said saw carriage (CRR), said flexible closing element (201) being dragged by the saw carriage (CRR) itself during its stroke.

4. A cutting machine according to any of the claims from 1 to 3, **characterised in that** said at least one recess (202) is provided only on the rear portion (LP) of said flexible closing element (201), which is constrained to the rear side of said saw carriage (CRR), and **in that** said rest position of the latter coincides with the forward end-of-stroke position or end-of-longitudinal-cut position (PFT) of the caw carriage (CRR).

5. A cutting machine according to any of the claims from 1 to 3, **characterised in that** said at least one recess (202) is provided only on the front portion (LA) of said flexible closing element (201), which is constrained to the front side of said saw carriage (CRR), and **in that** said rest position of the latter coincides with the start-of-longitudinal-cut position (PIT) of the saw carriage (CRR).

6. A cutting machine according to any of the claims from 1 to 3, **characterised in that** said plurality of recesses (202) obtained on the flexible closing element (201) are provided partly on the rear portion (LP) of said flexible closing element (201), which is constrained to the rear side of said saw carriage (CRR), and partly on the front portion (LA) of said flexible closing element (201), which is constrained to the front side of said saw carriage (CRR), and **in that** said rest position of the latter coincides with an intermediate position (PTI) of said saw carriage along the cutting line (LT).

7. A cutting machine according to any of the previous claims, **characterised in that** in correspondence to the grooves (SCN) for the passage of the bottom fingers (APn) of the grippers (PZn) or for the passage of similar apparatuses and close to the cutting slot (FT) there are provided mobile safety elements (SDP, SDA), which are suited to be moved by the bottom fingers (APn) of said grippers so as to prevent the fingers of an operator from getting trapped in potentially dangerous areas of the machine (10).

8. A machine according to claim 7, **characterised in that** said mobile safety elements (SDP, SDA) are mechanically operated by said bottom fingers (APn) of said grippers upon their passage in correspondence to the mobile safety elements (SDP, SDA) themselves.

9. A cutting machine according to any of the previous claims, **characterised in that** said flexible closing element (201) has a substantially trapezoidal section, its shorter base being the one arranged nearly at the same level as the upper surface (SS) of the working table (100).

10. A cutting machine according to any of the previous claims, **characterised in that** the rear end side (LP) of the flexible closing element (201) is supported, along the cutting slot (FT), by proper support profiles (103), so as to prevent the closing element (201) itself from bending, thus ensuring that its upper surface (201A) is kept nearly at the same level as the upper surface (SS) of the working table (100) along the entire cutting slot (FT).

## Patentansprüche

1. Schneidmaschine (10), die aufweist:
- eine Stützstruktur (11), die mit einem Arbeitstisch (100) versehen ist, der eine obere Fläche (SS) hat;
- einen Sägeschlitten (CRR), der wenigstens ein Kreissägeblatt (SC) aufweist und geeignet ist, während des Schneidvorgangs entlang eines Schneidschlitzes (FT) zu gleiten, der in dem Arbeitstisch (100) enthalten ist;
- wenigstens eine Presseinheit (PRR), die auf das zu schneidende Material an wenigstens einer Seite des Schneidschlitzes (FT) wirkt; und wobei die Schneidmaschine wenigstens eine Schließvorrichtung (200) aufweist, um den Schneidschlitz (FT) zu verschließen, um zu verhindern, dass Späne hindurchfallen;
- wenigstens eine Schiebevorrichtung (14) zum Positionieren des zu schneidenden Materials, die mit wenigstens einem Greifer (PZn) versehen ist, dessen unterer Finger (APn) dazu geeignet ist, in einer geeigneten Nut (SCN) zu gleiten, welche auf dem Arbeitstisch (100) vorgesehen ist;
wobei die Schneidmaschine (10) **dadurch gekennzeichnet ist, dass** die Schließvorrichtung (200) aufweist: ein flexibles Schließelement (201) zum Verschließen des Schneidschlitzes (FT), das eine lineare Ausdehnung hat, mit einem Phasenverhältnis bezüglich der Belegung des Sägeschlittens (CRR) bewegbar ist, und dazu geeignet ist, entlang einer relativen Führungs- und Stütznut (105), die entlang des Schneidschlitzes (FT) vorgesehen ist, unter dem Arbeitstisch (100) zu gleiten; ein Haltemittel (210) zum Halten des flexiblen Schließelements (201), das unter dem Arbeitstisch (100) außerhalb der Führungs- und Stütznut (105) vorgesehen und dazu geeignet ist, das flexible Schließelement (201) vollständig im Innenkörper der Schneidmaschine (10) zu hallen; wobei die obere Fläche (201A) des flexiblen Schließelements (201) in etwa auf derselben Ebene angeordnet ist wie die obere Fläche (SS) des Arbeitstisches (100); wobei das flexible Schließelement (201) mit wenigstens einer Ausnehmung (202) versehen ist, so dass zumindest in einer Ruhestellung (PFT, PIT, PTI) des Sägeschlittens (CRR) entlang seines Wegs die wenigstens eine Ausnehmung (202) mit dem korrespondierenden unteren Finger (APn) des Greifers (PZn) oder einer anderen Vorrichtung ausgerichtet ist, um den Durchtritt des letzteren über dem Schneidschlitz (FT) und durch die Ausnehmung (202) zu gestatten.

2. Schneidmaschine nach Anspruch 1, **dadurch gekennzeichnet, dass** das flexible Schließelement (201) eine Vielzahl von Ausnehmungen (202) aufweist, und dass, wenn sich der Sägeschlitten (CRR) in einer der Ruhestellungen (PFT, PIT, PTI) befindet, die Anordnung der Ausnehmungen (202) des flexiblen Schließelements (201) exakt die Anordnung der Nuten (SCN) für die Greifer (PZn) oder für die anderen Verrichtungen, die bei dem Arbeitstisch (100) vorgesehen sind, nachbildet.

3. Schneidmaschine nach einem der vorhergehenden Ansprüche, **dadurch gekennzeichnet, dass** sich das flexible Schließelement (201) im Innenkörper der Schneidmaschine (10) erstreckt, so dass seine gegenüberliegenden Seiten (LA, LP) an gegenüberliegende Seiten des Sägeschlittens (CRR) beschränkt sind, wobei das flexible Schließelement (201) durch den Sägeschlitten (CRR) selbst während seines Wegs gezogen wird.

4. Schneidmaschine nach einem der Ansprüche 1 bis 3, **dadurch gekennzeichnet, dass** die wenigstens eine Ausnehmung (202) nur in dem hinteren Abschnitt (LP) des flexiblen Schließelements (201) vorgesehen ist, der an die hintere Seite des Sägeschlittens (CRR) beschränkt ist, und dass die Ruhestellung des letzteren mit der vorderen Weg-Endposition oder der Endposition des Längsschnitts (PFT) des Sägeschlittens (CRR) zusammenfällt.

5. Schneidmaschine nach einem der Ansprüche 1 bis 3, **dadurch gekennzeichnet, dass** die wenigstens eine Ausnehmung (202) nur an dem vorderen Abschnitt (LA) des flexiblen Schließelements (201) vorgesehen ist, der an die vordere Seite des Sägeschlittens (CRR) beschränkt ist, und dass die Ruhestellung des letzteren mit der Startposition des Längsschnitts (PIT) des Sägeschlittens (CRR) zusammenfällt.

6. Schneidmaschine nach einem der Ansprüche 1 bis 3, **dadurch gekennzeichnet, dass** die Vielzahl von Ausnehmungen (202), die an dem flexiblen Schließelement (201) enthalten sind, teilweise an dem hinteren Abschnitt (LP) des flexiblen Schließelements (201), der an die hintere Seite des Sägeschlittens (CRR) beschränkt ist, und teilweise an dem vorderen Abschnitt (LA) des flexiblen Schließelements (201), der an die vordere Seite des Sägeschlittens (CRR) beschränkt ist, vorgesehen sind, und dass die Ruhestellung des letzteren mit einer Zwischenstellung (PTI) des Sägeschlittens entlang der Schnittlinie (LT) zusammenfällt.

7. Schneidmaschine nach einem der vorhergehenden Ansprüche, **dadurch gekennzeichnet, dass** in Entsprechung mit den Nuten (SCN) für den Durchgang der unteren Finger (APn) der Greifer (PZn) oder für den Durchgang ähnlicher Verrichtungen und nahe dem Schneidschlitz (FT) mobile Sicherheitselemente (SDP, SDA) vorgesehen sind, die dazu geeignet sind, durch die unteren Finger (APn) der Greifer bewegt zu werden, um zu verhindern, dass sich die Finger eines Benutzers in potenziell gefährlichen Bereichen der Maschine (10) verfangen.

8. Maschine nach Anspruch 7, **dadurch gekennzeichnet, dass** die mobilen Sicherheitselemente (SDP, SDA) durch die unteren Finger (APn) der Greifer bei ihrem Durchgang in Entsprechung mit den mobilen Sicherheitselementen (SDP, SDA) selbst mechanisch betrieben werden.

9. Schneidmaschine nach einem der vorhergehenden Ansprüche, **dadurch gekennzeichnet, dass** das flexible Schließelement (201) einen im Wesentlichen trapezförmigen Schnitt hat, wobei seine kürzere Basis diejenige ist, die in etwa auf derselben Ebene angeordnet ist wie die obere Fläche (SS) des Arbeitstisches (100).

10. Schneidmaschine nach einem der vorhergehenden Ansprüche, **dadurch gekennzeichnet, dass** die hintere Endseite (LP) des flexiblen Schließelements (201) entlang des Schneidschlitzes (FT) durch geeignete Stützprofile (103) gestützt wird, um zu verhindern, dass sich das Schließelement (201) selbst biegt, wodurch sichergestellt wird, dass seine obere Fläche (201 A) in etwa auf derselben Ebene gehalten wird wie die obere Fläche (SS) des Arbeitstisches (100) entlang des gesamten Schneidschlitzes (FT).

## Revendications

1. Machine de coupe (10) comprenant :
- une structure de support (11) dotée d'une table de travail (100) ayant une surface supérieure (SS) ;
- un chariot porte-scie (CRR) comprenant au moins une lame circulaire (SC), qui est adaptée pour coulisser, au cours de l'opération de coupe, le long d'une fente de coupe (FT) obtenue sur ladite table de travail (100) ;
- au moins une unité de presse (PRR) agissant sur le matériau devant être coupé sur au moins un côté de ladite fente de coupe (FT) ; et la machine de coupe comprenant au moins un dispositif de fermeture (200) pour fermer la fente de coupe (FT), de manière à empêcher des copeaux de tomber à travers ;
- au moins un dispositif poussoir (14) destiné au positionnement du matériau devant être coupé, qui est doté d'au moins un préhenseur (PZn), dont le doigt inférieur (APn) est adapté pour coulisser à l'intérieur d'une gorge appropriée (SCN) située sur la table de travail (100) ;
la machine de coupe (10) étant **caractérisée en ce que** ledit dispositif de fermeture (200) comprend : un élément de fermeture flexible (201) pour fermer la fente de coupe (FT), qui présente une extension linéaire, mobile avec une relation de phase par rapport au déplacement du chariot porte-scie (CRR) et adapté pour coulisser sous la table de travail (100) le long d'une gorge de guidage et de support respective (105) située le long de ladite fente de coupe (FT) ; des moyens de retenue (210) destinés à retenir ledit élément de fermeture flexible (201) étant situés sous la table de travail (100) à l'extérieur de ladite gorge de guidage et de support (105) et étant adaptés pour maintenir complètement ledit élément de fermeture flexible (201) à l'intérieur du corps interne de la machine de coupe (10) ; la surface supérieure (201A) dudit élément de fermeture flexible (201) étant agencée pratiquement au même niveau que la surface supérieure (SS) de la table de travail (100) ; ledit élément de fermeture flexible (201) étant doté d'au moins un évidement (202), de telle sorte qu'au moins dans une position de repos (PFT, PIT, PTI) dudit chariot porte-scie (CRR) le long de sa course, ledit au moins un évidement (202) est aligné avec le doigt inférieur correspondant (APn) du préhenseur (PZn) ou d'un autre appareil, de sorte à permettre le passage de ce dernier au-dessus de la fente de coupe (FT) et à travers ledit évidement (202).

2. Machine de coupe selon la revendication 1, **caractérisée en ce que** l'élément de fermeture flexible (201) comprend une pluralité d'évidements (202), et **en ce que**, avec ledit chariot porte-scie (CRR) dans n'importe quelle desdites positions de repos (PFT, PIT, PTI), l'agencement des évidements (202) de l'élément de fermeture flexible (201) reproduit exactement l'agencement des gorges (SCN) pour les préhenseurs (PZn) ou pour les autres appareils disponibles dans ladite table de travail (100).

3. Machine de coupe selon l'une quelconque des revendications précédentes, **caractérisée en ce que** ledit élément de fermeture flexible (201) s'étend à l'intérieur du corps interne de ladite machine de coupe (10), de sorte que ses côtés opposés (LA, LP) sont contraints vers des côtés opposés dudit chariot porte-scie (CRR), ledit élément de fermeture flexible (201) étant entraîné par le chariot porte-scie (CRR) lui-même au cours de sa course.

4. Machine de coupe selon l'une quelconque des revendications 1 à 3, **caractérisée en ce que** ledit au moins un évidement (202) n'est présent que sur la partie arrière (LP) dudit élément de fermeture flexible (201), qui est contrainte vers la face arrière dudit chariot porte-scie (CRR), et **en ce que** ladite position de repos de ce dernier coïncide avec la position de fin de course avant ou la position de fin de coupe longitudinale (PFT) du chariot porte-scie (CRR).

5. Machine de coupe selon l'une quelconque des revendications 1 à 3, **caractérisée en ce que** ledit au moins un évidement (202) n'est présent que sur la partie avant (LA) dudit élément de fermeture flexible (201), qui est contrainte vers la face avant dudit chariot porte-scie (CRR), et **en ce que** ladite position de repos de ce dernier coïncide avec la position de début de coupe longitudinale (PIT) du chariot porte-scie (CRR).

6. Machine de coupe selon l'une quelconque des revendications 1 à 3, **caractérisée en ce que** ladite pluralité d'évidements (202) obtenus sur l'élément de fermeture flexible (201) sont situés partiellement sur la partie arrière (LP) dudit élément de fermeture flexible (201), qui est contrainte vers la face arrière dudit chariot porte-scie (CRR), et partiellement sur la partie avant (LA) dudit élément de fermeture flexible (201), qui est contrainte vers la face avant dudit chariot porte-scie (CRR), et **en ce que** ladite position de repos de ce dernier coïncide avec une position intermédiaire (PTI) dudit chariot porte-scie le long de la ligne de coupe (LT),

7. Machine de coupe selon l'une quelconque des revendications précédentes, **caractérisée en ce qu'**en correspondance avec les gorges (SCN) pour le passage des doigts inférieurs (APn) des préhenseurs (PZn) ou pour le passage d'appareils similaires et près de la fente de coupe (FT) sont présents des éléments de sécurité mobiles (SDP, SDA), qui sont adaptés pour être déplacés par les doigts inférieurs (APn) desdits préhenseurs de sorte à empêcher les doigts d'un opérateur d'être emprisonnés dans des zones potentiellement dangereuses de la machine (10).

8. Machine selon la revendication 7, **caractérisée en ce que** lesdits éléments de sécurité mobiles (SDP, SDA) sont actionnés mécaniquement par lesdits doigts inférieurs (APn) desdits préhenseurs lors de leur passage en correspondance avec les éléments de sécurité mobiles (SDP, SDA) eux-mêmes.

9. Machine de coupe selon l'une quelconque des revendications précédentes, **caractérisée en ce que** ledit élément de fermeture flexible (201) possède une section sensiblement trapézoïdale, sa base plus courte étant celle agencée pratiquement au même niveau que la surface supérieure (SS) de la table de travail (100).

10. Machine de coupe selon l'une quelconque des revendications précédentes, **caractérisée en ce que** le côté d'extrémité arrière (LP) de l'élément de fermeture flexible (201) est supporté, le long de la fente de coupe (FT), par des profilés de support adéquats (103), de sorte à empêcher l'élément de fermeture (201) lui-même de fléchir, garantissant ainsi que sa surface supérieure (201A) est maintenue pratiquement au même niveau que la surface supérieure (SS) de la table de travail (100) le long de la totalité de la fente de coupe (FT).
